# EUROPÄISCHE PATENTANMELDUNG

(11) **EP 4 799 959 A1**
(43) Veröffentlichungstag der Anmeldung: **02.09.2026**
(21) Anmeldenummer: 26161242.8
(22) Anmeldetag: 27.02.2026
(51) Int. Cl.: B65G 9/00, B65G 17/48

(54) **FÖRDEREINHEIT ZUM HÄNGENDEN TRANSPORT VON TRANSPORTELEMENTEN FÜR FÖRDERGÜTER UND FÖRDERANLAGE MIT FÖRDEREINHEITEN**

(30) Priorität: 28.02.2025 CH 1972025; 10.09.2025 CH 10502025
(71) Anmelder: FERAG AG, 8340 Hinwil (CH)
(72) Erfinder: FENILE, Roberto, 8340 Hinwil (CH); GUHL, Simon, 8340 Hinwil (CH)
(74) Vertreter: Frei Patent Attorneys

(57) **Zusammenfassung**

Fördereinheit (1) zum hängenden Transport von Fördergütern (10) wobei die Fördereinheit ein Förderelement (8) mit einem Traghaken (13) und einem Transportelement (6) umfasst. Das Transportelement (6) besteht aus mindestens zwei Transporttaschen (15, 16) und jede Transporttasche (15, 16) weist in Fördererrichtung (F) eine vorlaufende und eine nachlaufende Taschenwand aufweist, die über einen Taschenbodenabschnitt (25, 26) miteinander verbunden sind. Die Taschenwände (21, 22, 23, 24) der zwei Transporttaschen (15, 16) bestehen aus unterschiedlichen Materialien, wobei das Taschenwandmaterial der ersten Transporttasche (15) aus einem weichen, biegeschlaffen Material besteht und das Taschenwandmaterial der zweiten Transporttasche (16) aus einem formstabilen, festen Material besteht.

## Beschreibung

Die vorliegende Erfindung bezieht sich auf das Gebiet der Transport- und Fördertechnik, insbesondere der Intralogistik. Sie betrifft eine Fördereinheit zum hängenden Transport von Transportelementen, insbesondere von Transporttaschen, in einer Förderanlage, insbesondere einer schienengeführten Förderanlage oder einem Förderkettenanlage und sie betrifft weiter eine Förderanlage mit solchen Fördereinheiten gemäss den Oberbegriffen der Ansprüche 1 und 16.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, beispielsweise Kleiderbügel mit daran aufgehängten Kleidungsstücken, oder in entsprechende Transportelemente wie beispielsweise Transporttaschen eingebracht, die wiederum hängend an den Förderelementen gelagert sind.

Hängefördersysteme können als Transportkettenanlagen realisiert sein, bei welchen eine Vielzahl von Förderelementen die Glieder einer Kette bilden, welche entlang eines Förderweges bewegt wird.

Ebenfalls bekannt sind schwerkraftgeförderte Fördersysteme, bei welchen sich einzelne mit Rädern ausgestattete Förderelemente, wie Laufwagen, auf entsprechenden Laufschienen bewegen. Ein Beispiel eines solchen schwerkraftgeförderten, schienengeführten Fördersystems ist aus der WO 2016/030275 A1 der Anmelderin bekannt.

Hängefördersysteme mit Transportelementen sind besonders geeignet für die effiziente Förderung von heterogenen Stückgut-Waren, wie beispielsweise Werkstücken in Produktionsprozessen, Ersatzteilen, Konsumgütern, wie Büchern, Kleidern, Schuhen, etc.

So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in leere Transportelemente und das Entladen der Waren aus den Transportelementen.

Ein manuelles Befüllen von bereitgestellten leeren Transportelementen wie beispielsweise Transporttaschen erlaubt eine flexible, schonende Handhabung verschiedener Waren, ist jedoch langsam und kostenintensiv.

So ist es aus dem Stand der Technik bekannt, dass für den Transport von Waren bzw. Artikeln, nachfolgend vereinfacht Fördergüter genannt, Hängefördereinrichtungen mit Fördertaschen eingesetzt werden.

Die Publikationsschriften DE 10 2004 018569 A1 und US 11465847 B2 beschreiben beispielsweise eine Hängefördereinrichtung mit einer Mehrzahl von zusammenklappbaren Förder- bzw. Sammeltaschen zum Aufnehmen und sortierenden Sammeln von Objekten, insbesondere von Kleidungsstücken. Die Sammeltasche umfasst ein schwenkbares Rahmengestell und einen am Rahmengestell hängenden Taschenbeutel. Die Sammeltasche ist über einen am Rahmengestell angebrachten Hakenverbindungselement an der Hängefördereinrichtung bzw. an einem Laufwagen aufgehängt.

Der Vorteil von Fördertaschen liegt darin, dass diese faltbar ausgebildet sind. Dadurch lässt sich das Aufnahmefach durch Zusammenfalten komprimieren. Die Fördertaschen erlauben auf diese Weise gegenüber beispielsweise starren Kisten und Behältern eine platzsparende Güterlogistik. So lassen sich leere Fördertaschen mit komprimiertem Aufnahmefach platzsparend lagern oder fördern. Die Aufnahmefächer brauchen erst für den Warentransport oder die Warenlagerung raumeinnehmend expandiert zu werden.

Die EP 2 418 160 B1 zeigt eine andere Beladestation für in einer Hängeförderanlage transportierte Transporttaschen. Die Transporttaschen weisen einen an einem Förderelement aufgehängten Rahmenbügel auf, an welchem zwei Enden einer flexiblen Stoffbahn befestigt sind und einen Beutel bilden. Unterhalb des Aufhängehakens des Beutels ist eine Druckplatte angeordnet. In der Beladestation ist eine Kufe angeordnet, welche bei der Bewegung einer Transporttasche durch die Beladestation die Druckplatte und damit auch die Transporttasche von einer Orientierung quer zur Förderrichtung in eine Orientierung parallel zur Förderrichtung drückt und über den Verlauf der Kufe in dieser Orientierung hält. Die Form des Aufhängehakens ist so gewählt, dass dieser dabei im Traghaken des Förderelements weg von einem Minimum der potenziellen Energie nach oben gedrückt wird. Gleichzeitig wird der Rahmenbügel auch senkrecht zur Förderrichtung nach aussen gedrückt, und nimmt eine Lage an, in welcher der Beutel nach oben hin geöffnet ist. In dieser Position kann die Transporttasche von der Seite her durch die obere Öffnung befüllt werden. Nach dem Verlassen des Bereichs der Kufe gleitet der Aufhängehaken auf dem Traghaken wieder zurück zum Minimum der potenziellen Energie, und die Tasche schwenkt zurück in eine Orientierung quer Förderrichtung.

Die Publikationsschrift CH 720 950 A1 beschreibt eine Fördertasche für eine Hängeförderanlage zum hängenden Fördern eines Fördergutes entlang einer Förderbahn, wobei die Fördertasche in Förderrichtung betrachtet eine vordere Taschenwand und eine der vorderen Taschenwand nachlaufende hintere Taschenwand aufweist, welche durch einen Taschenboden miteinander verbunden sind, und die vordere und hintere Taschenwand zusammen mit dem Taschenboden ein nach oben durch eine Taschenöffnung offenes Hauptaufnahmefach begrenzen. Die Fördertasche enthält ferner eine Halteeinrichtung zum klemmenden Aufnehmen eines flächigen Förderguts an der Aussenseite von mindestens einer der Taschenwände, ins besonders der Rückwand.

Die bereits genannte Publikationsschrift DE 10 2004 018569 B4 zeigt eine weitere Vorrichtung zum Beladen von Transporttaschen in einer Hängeförderanlage. Die Transporttaschen weisen einen quer zur Förderrichtung an einem Förderelement aufgehängten Rahmenbügel auf, welcher eine obere Öffnung der Tasche definiert. Eine an zwei Enden an dem Rahmenbügel befestigte flexible Stoffbahn bildet einen Beutel zur Aufnahme von Stückgutelementen. Seitenwandungen schliessen nur einen unteren Teil der Seiten des Beutels, so dass seitliche Einwurföffnungen verbleiben. Beim Bewegen der Transporttaschen entlang des Förderwegs durch die Vorrichtung bewegen entsprechend ausgestalteten Kulissen den im leeren Zustand der Transporttasche senkrecht hängenden Rahmenbügel in eine waagrechte Position, in welcher die seitlichen Einwurf Öffnungen maximal geöffnet sind. Die Artikel können nun manuell durch die seitlichen Öffnungen in die Tasche geworfen werden. Eine automatische Befüllung ist nicht möglich, da die oberen Öffnungen der Taschen wegen der Laufschiene des Fördersystems nicht zugänglich sind.

Die WO 2018/142242 A1 zeigt eine Fördereinheit zum hängenden Transport von Transportelementen in einem Fördersystem, insbesondere einem schienengeführten Fördersystem oder einem Förderkettensystem. Das Fördersystem umfasst einen jeweils an einem Förderelement, insbesondere einem Laufwagen oder einem Förderkettenglied, angebrachten Traghaken, ein Transportelement, und einen am Transportelement angebrachten Aufhängehaken, wobei der Aufhängehaken im Traghaken hängend gelagert ist. Der Traghaken ist derart ausgestaltet, dass der Aufhängehaken im Traghaken zwei stabile Positionen einnehmen kann. Der Aufhängehaken in einer ersten stabilen Position ist gegenüber dem Aufhängehaken in einer zweiten stabilen Position um einen Winkel gedreht. Das Fördersystem ist mit Wirkanordnungen zur aktiven Drehung der Transporttasche ausgestaltet.

Moderne Transportelemente wie zum Beispiel Transporttaschen in Hängeförderanlagen können mehrere Aufnahmeplätze für Fördergüter aufweisen. Die mehreren Aufnahmeplätze können unterschiedlich gestaltet sein, je nachdem welches Fördergut gefördert werden soll. Bei der seitlichen Befüllung der Transporttaschen von oben mit Fördergütern stellt sich das Problem, dass die Transporttaschen in der richtigen Ausrichtung zur Beladeposition gebracht werden sollten, um die Befüllung effizient durchführen zu können. Selbst für eine Befüllung der Transporttaschen manuell, also von Hand, sollte die Transporttaschen korrekt ausgerichtet an die Beladeposition herangeführt werden.

So können Transporttaschen mit mehreren Aufnahmefächern ausgestattet sein, welche sich an verschiedenen Seitenwänden der Transporttaschen befinden können. Zum Befüllen der einzelnen Aufnahmefächer mit Fördergütern ist es mitunter notwendig, dass die Transporttasche vor Erreichen der Beladeposition in die richtige Ausrichtung gebracht wird, so dass das Fördergut in das vorgesehenes Aufnahmefach eingeführt werden kann. Wenn die Transporttasche in einer falschen Ausrichtung zur Beladeposition gefördert wird, ist es notwendig, die Transporttasche manuell in die richtige Position zu drehen, welches die Beladung verzögert oder zu Fehlern bei der Beladung der Transporttaschen führen kann.

Unterschiedliche Fördergüter können oftmals nicht in den gleichen Transporttaschen gefördert werden, da das Volumen oder das Gewicht oder die Beschaffenheit der Fördergüter deutlich unterschiedlich ist. So eignen sich beim hängenden Fördern von Fördergüter die Transporttaschen mit Gewebebeuteln, sogenannte «Soft Pouches», nur für einen Teil der Fördergüter. Für den Rest der Güter müssen andere Lösungen zur Förderung bereitgestellt werden.

Es besteht allgemein das Bedürfnis nach Fortschritten in diesem Gebiet der Technik.

### Darstellung der Erfindung

Es ist eine Aufgabe der Erfindung, eine Fördereinheit zum hängenden Transport von Transportelementen in einer Förderanlage, insbesondere einer schienengeführten Förderanlage oder einer Förderkettenanlage, bereitzustellen, welche eine einfache und effiziente Lösung ist, auch unterschiedliche Güter mittels einer Fördereinheit fördern zu können.

Eine andere Aufgabe der Erfindung ist es, eine entsprechende Förderanlage mit diesen Fördereinheiten zur Verfügung zu stellen.

Diese und andere Aufgaben werden gelöst durch eine erfindungsgemässe Fördereinheit, ein erfindungsgemässes Fördersystem gemäss den unabhängigen Ansprüchen. Weitere Ausführungsformen und Weiterbildungen sind in den abhängigen Ansprüchen gegeben.

Erfindungsgemäss wird eine Fördereinheit zum hängenden Transport von Fördergütern in einer Förderanlage, insbesondere einer schienengeführten Förderanlage oder einer Förderkettenanlage, bereitgestellt.

Die Fördereinheit umfasst ein Förderelement, insbesondere einen Laufwagen oder ein Förderkettenglied, mit einem daran angebrachten ersten Verbindungsorgan, wie Traghaken, und ein Transportelement, das mit einer Rahmenstruktur ausgestattet ist, sowie ein an der Rahmenstruktur angebrachtes bzw. angeordnetes zweites Verbindungsorgan, wie Aufhängehaken. Das erste Verbindungsorgan, wie Aufhängehaken, ist am bzw. im zweiten Verbindungsorgan, wie Traghaken des Förderelements hängend gelagert.

Das Transportelement umfasst zwei Transporttaschen bzw. besteht aus diesen, die jeweils eine vorlaufende und eine nachlaufende Taschenwand in Förderrichtung F aufweisen. Die vorlaufende und die nachlaufende Taschenwand der beiden Transporttaschen sind über einen Taschenbodenabschnitt miteinander verbunden. Die Taschenwände der beiden Transporttaschen bestehen aus unterschiedlichen Materialien, wobei das Taschenwandmaterial der ersten Transporttasche aus einem weichen, biegeschlaffen Material besteht und das Taschenwandmaterial der zweiten Transporttasche aus einem formstabilen, festen Material besteht.

Die Rahmenstruktur kann einen offenen oder geschlossenen Rahmen ausbilden.

Die Rahmenstruktur bildet insbesondere einen Tragrahmen für eine Transporttasche insbesondere für die erste Transporttasche aus.

In einer Weiterbildung ist die Rahmenstruktur aus einem Drahtmaterial geformt.

Unter Draht ist ein langer, dünner Metallstrang zu verstehen, der flexibel genug ist, um gebogen zu werden, aber stabil genug, um Kräfte zu übertragen. Der Draht kann eine Dicke von bis zu 10 mm, insbesondere von bis zu 6 mm aufweisen.

Die Rahmenstruktur kann aber auch aus Strängen aus Kunststoff, insbesondere faserverstärktem Kunststoff bestehen.

In einer Weiterbildung sind die beiden Transporttaschen über die Rahmenstruktur miteinander verbunden.

Die Rahmenstruktur kann Teil der ersten Transporttasche sein.

Die Rahmenstruktur weist insbesondere eine obere Querstrebe auf, welche eine obere Kante ausbildet. Die obere Querstrebe ist in Förderposition des Transportelements insbesondere quer zur Förderrichtung angeordnet.

Die Rahmenstruktur weist insbesondere eine untere Querstrebe auf, welche eine untere Kante ausbildet. Die untere Querstrebe ist in Förderposition des Transportelements insbesondere quer zur Förderrichtung angeordnet.

Die beiden Transporttaschen sind insbesondere jeweils mit der oberen Querstrebe verbunden. Die beiden Transporttaschen sind insbesondere über die obere Querstrebe miteinander verbunden.

Das zweite Verbindungsorgan, wie Aufhängehaken, ist insbesondere mit der oberen Querstrebe der Rahmenstruktur verbunden bzw. an dieser angeordnet. Der Aufhängehaken kann Teil, insbesondere integraler Bestandteil der oberen Querstrebe sein bzw. aus dieser ausgeformt sein.

In einer Weiterbildung besteht das Taschenwandmaterial der ersten Transporttasche aus einem flächenförmigen Material.

In einer Weiterbildung besteht das Taschenwandmaterial der ersten Transporttasche aus einem Gewebe, einem Textilverbundstoff bzw. textilen Flächengebilde, wie Vlies oder Filz, einem Folienmaterial, einem Gummi oder einem Silikongummi.

Gemäss einer Weiterbildung ist das Taschenwandmaterial der zweiten Transporttasche biegefest bzw. steif bzw. starr.

In einer Weiterbildung besteht das Taschenwandmaterial der zweiten Transporttasche aus einem Kunststoffmaterial oder einem Hohlkammermaterial oder einem Verbundmaterial oder einem Mehrschichtmaterial oder einem Metall.

In einer Weiterbildung ist die erste Transporttasche in Förderrichtung die vorlaufende Transporttasche und die zweite Transporttasche die nachlaufende Transporttasche.

In einer alternativen Weiterbildung ist die erste Transporttasche in Förderrichtung die nachlaufende Transporttasche und die zweite Transporttasche die vorlaufende Transporttasche.

In einer Weiterbildung weist die Fördereinheit ein Identifikationsmittel auf, insbesondere auf dem Laufwagen. Das Identifikationsmittel kann eine RFID-Etikette, ein QR-Code oder ein Strichcode sein.

In einer Weiterbildung weisen die beiden Transporttaschen je Transportelement unterschiedliche Identifikationsmittel auf.

In einer Weiterbildung weisen die beiden Transporttaschen je Transportelement unterschiedliche Transporttaschentypen auf, die insbesondere unterschiedliche Aufnahmevolumen für Fördergüter aufweisen.

In einer weiteren Ausführungsform weist das Förderelement eine vertikale Drehachse auf, um welche das Förderelement bzw. beide Transporttaschen gemeinsam drehbar sind. Die Drehachse entspricht insbesondere einer Mittelängsachse des Transportelements.

In einer weiteren Ausführungsform können die beiden Transporttaschen, in Förderrichtung betrachtet, nach rechts gedreht werden, um die zweite Transporttasche zu beladen oder die beiden Transporttaschen, in Förderrichtung betrachtet, nach links gedreht werden, um die erste Transporttasche zu beladen.

In einer bevorzugten Ausgestaltung der Erfindung ist die zweite Transporttasche an der Rahmenstruktur, insbesondere der ersten Transporttasche, entlang der Förderrichtung schwenkbar befestigt.

In einer weiteren bevorzugten Ausgestaltung der Erfindung ist die zweite Transporttasche an der Rahmenstruktur bzw. an deren oberen Querstrebe, insbesondere der ersten Transporttasche, mittels mindestens einer Gewebeschlaufe, insbesondere mehreren Gewebeschlaufen, befestigt, die z. B. an der zweiten Transporttasche befestigt, z. B. angenäht, sind.

In einer weiteren Ausgestaltung der Erfindung ist die zweite Transporttasche mit einem schwenkbaren Bügel ausgestatte, der zur Befüllung der Transporttasche auf geschwenkt wird.

In einer bevorzugten Ausgestaltung der Erfindung enthält die zweite Transporttasche zwei formstabile Platten, die als vorlaufende und nachlaufende Taschenwand dienen, welche über eine Schwenkverbindung, wie Schwenkscharnier, am Taschenboden miteinander schwenkbar verbunden sind oder besteht aus diesen.

Gemäss einer Weiterbildung ist die zweite Transporttasche parallelogrammartig aufklappbar bzw. zusammenfaltbar. Der Taschenboden ist hierbei insbesondere ebenfalls in als formstabile Platte ausgebildet.

In einer besonders bevorzugten Ausgestaltung der Erfindung besteht die zweite Transporttaschen aus zwei formstabilen Platten, die als vorlaufende und nachlaufende Taschenwand dienen, wobei die beiden Platten an einem oberen Bereich insbesondere eine Schliessverbindung aufweisen. Diese Schliessverbindung kann aus einer Klettverbindung oder eine magnetische Verbindung oder aus einer Klemmverbindung oder aus einer Hakenverbindung bestehen.

Die Transporttasche kann insbesondere als Klemmtasche ausgebildet sein, bei welcher die vorlaufende und nachlaufende, formstabile Taschenwand über eine Schwenkverbindung, wie Schwenkscharnier oder Gewebestreifen relativ zueinander schwenkbar verbunden sind. Der Taschenboden wird hier durch die Schwenkverbindung ausgebildet.

In einer bevorzugten Ausgestaltung der Erfindung sind der Laufwagen und/oder die Transporttaschen mit Identifikationsmitteln ausgestattet, damit sie durch Detektionsvorrichtungen in der Förderanlage eindeutig erkannt werden können.

In einer weiteren Ausführungsform wird eine Förderanlage zum hängenden Transport von Fördergütern entlang von Förderschienen, insbesondere eine schienengeführte Förderanlage oder ein Förderkettenanlage, bereitgestellt, die mindestens eine Fördereinheit nach einem der oben genannten Merkmalen umfasst.

Fördereinheiten zum hängenden Transport von Transportelementen können in einem Fördersystem, insbesondere einer schienengeführten Förderanlage oder einer Förderkettenanlage, mit einem an einem Förderelement, insbesondere einem Laufwagen oder einem Förderkettenglied, mit einem angebrachten Traghaken versehen sein.

Die Förderkettenanlage ist insbesondere ebenfalls schienengeführt, indem die Förderkette mit den Förderkettengliedern entlang bzw. in einer Schiene, wie Hohlschiene, geführt wird.

Das Transportelement wiederum kann mit einem zweiten Verbindungsorgan, wie Aufhängehaken, versehen sein, wobei das zweite Verbindungsorgan, wie Aufhängehaken im ersten Verbindungsorgan, wie Traghaken, hängend gelagert ist.

Ein Traghaken ist insbesondere in der Art ausgestaltet, dass ein Aufhängehaken im Traghaken mindestens drei stabile Positionen einnehmen kann. Hierbei wird der Aufhängehaken in einer ersten stabilen Position gegenüber dem Aufhängehaken in einer zweiten stabilen Position, d.h. bezogen auf eine zweite stabile Position des Aufhängehakens, um einen Winkel gedreht., Ferner ist der Aufhängehaken in der ersten stabilen Position gegenüber dem Aufhängehaken in einer dritten stabilen Position, d.h. bezogen auf eine dritte stabile Position des Aufhängehakens, um einen anderen Winkel als in der zweiten stabilen Position gedreht.

In der ersten stabilen Position befindet sich das Transportelement insbesondere in einer Förderstellung. In der zweiten stabilen Position befindet sich das Transportelement insbesondere in einer Belade- oder Entladestellung. In der dritten stabilen Position befindet sich das Transportelement insbesondere in einer Belade- oder Entladestellung.

"Stabile Position" bedeutet insbesondere, dass der Aufhängehaken bzw. das Förderelement mit dem Aufhängehaken in einer Ruhestellung in seiner Position bzw. Drehposition am Traghaken verharrt. "Ruhestellung" bedeutet insbesondere, dass sich die dazugehörige Fördereinheit nicht in einer Förderbewegung befindet. Dies kann z. B. an einer Be- oder Entladestation der Fall sein.

Das Verharren des Aufhängehakens in der "stabilen Position" kann ohne Fremdeinwirkung erfolgen. Dies ist insbesondere bei der ersten stabilen Position der Fall.

Das Verharren des Aufhängehakens in der "stabilen Position" kann auch durch ein von aussen auf den Aufhängehaken bzw. das Transportelement in der stabilen Position einwirkendes Anschlagelement bewirkt werden. Das Anschlagelement hält z. B. in einer Anschlagposition, in welcher das Transportelement bzw. der Aufhängehaken an das Anschlagelement anschlägt bzw. diesem ansteht, vor einem Zurückschwenken des Transportelements aus der zweiten bzw. der dritten stabilen Position in die erste stabile Position ab.

Der Traghaken kann ein offener oder geschlossener Haken sein. Ein geschlossener Haken kann z. B. als Öse bzw. ring- oder schlaufenförmiger Körper vorliegen.

Der Aufhängehaken kann ein offener oder geschlossener Haken sein. Ein geschlossener Haken kann z. B. als Öse bzw. ring- oder schlaufenförmiger Körper vorliegen.

Eine weitere vorteilhafte Weiterbildung der Fördereinheit erfolgt dadurch, dass der Aufhängehaken in der Art zwischen der ersten stabilen Position und der zweiten stabilen Position und der dritten stabilen Position hin und her überführbar ist, dass der Aufhängehaken konstant auf dem Traghaken aufliegt.

Eine weitere vorteilhafte Ausführung der Fördereinheit offenbart die Erfindung, wobei der Traghaken eine erste Auflageposition bzw. -stelle, eine zweite Auflageposition bzw. -stelle und eine dritte Auflageposition bzw. -stelle für den Aufhängehaken aufweist bzw. ausbildet.

Der Aufhängehaken liegt in der ersten stabilen Position auf der ersten Auflageposition bzw. - stelle auf, in der zweiten stabilen Position auf der zweiten Auflageposition bzw. -stelle auf und in der dritten stabilen Position auf der dritten Auflageposition bzw. -stelle auf. Zwischen der ersten Auflageposition bzw. -stelle und der zweiten Auflageposition bzw. -stelle und der dritten Auflageposition bzw. -stelle ist ein Verbindungssegment angeordnet, auf dem der Aufhängehaken gleitend zwischen der ersten stabilen Position, der zweiten stabilen Position und der dritten stabilen Position hin und her überführbar ist.

Die Verbindungssegmente sind z. B. als Armabschnitte ausgebildet.

Eine weitere vorteilhafte Weiterbildung der Fördereinheit wird durch die Erfindung aufgezeigt, wobei der Traghaken derart ausgestaltet ist, dass in einer bestimmten ersten räumlichen Orientierung bzw. Anordnung der ersten Auflageposition bzw. -stelle des Traghakens der Aufhängehaken auf der ersten Auflageposition bzw. -stelle die erste stabile Position einnehmen kann, in der sich der Aufhängehaken in einer ersten Ebene ausrichtet, und in einer von der bestimmten ersten räumlichen Orientierung bzw. Anordnung verschiedenen zweiten räumlichen Orientierung bzw. Anordnung der zweiten Auflageposition bzw. -stelle des Traghakens der Aufhängehaken auf der zweiten Auflageposition bzw. -stelle die zweite stabile Position einnehmen kann, in der sich der Aufhängehaken in einer zweiten Ebene ausrichtet, und in einer von der bestimmten zweiten räumlichen Orientierung bzw. Anordnung verschiedenen dritten räumlichen Orientierung bzw. Anordnung der dritten Auflageposition bzw. -stelle des Traghakens der Aufhängehaken auf der dritten Auflageposition bzw. -stelle die dritte stabile Position einnehmen kann, in der sich der Aufhängehaken in einer dritten oder der zweiten Ebene ausrichtet.

In einer bestimmten ersten räumlichen Orientierung bzw. Anordnung der ersten Auflageposition bzw. -stelle des Traghakens entspricht die erste Position insbesondere einem Minimum der potenziellen Energie des hängend gelagerten Transportelements.

Der Aufhängehaken weist in der ersten stabilen Position gegenüber der zweite und dritten stabilen Position insbesondere eine tiefere bzw. die tiefste potenzielle Energie auf.

So liegt die erste Auflageposition bzw. -stelle und somit auch der Aufhängehaken in der ersten stabilen Position gegenüber der zweiten und dritten Auflageposition bzw. -stelle bzw. der zweiten und dritten stabilen Position entlang einer horizontalen Förderstrecke in Schwerkraftrichtung betrachtet insbesondere auf einem tieferen Niveau.

Durch Drehen des Aufhängehakens um einen bestimmten Drehwinkel, z. B. 90° (Winkelgrad), ist dieser zwischen der ersten Position und der zweiten Position oder zwischen der ersten Position und der dritten Position am Traghaken hin und her überführbar.

Die erste, zweite und dritte Auflagestellen weisen am Traghaken wie erwähnt voneinander verschiedene räumliche Orientierungen bzw. Anordnungen auf. Gemäss einer Weiterbildung ist die erste Auflagestelle in einer Projektion der Auflagestellen in einer Ebene senkrecht zur Förderrichtung insbesondere zwischen der zweiten und dritten Auflagestelle angeordnet. Die erste Auflagestelle ist in Förderrichtung insbesondere der zweiten und dritten Auflagestelle vorlaufend angeordnet.

Die erfindungsgemässe Fördereinheit enthält nun in einer Weiterbildung ein Transportelement mit einem Aufhängehaken, wobei der Aufhängehaken durch Drehen des Transportelementes um eine Vertikale der Förderrichtung, z. B. um 90°, zwischen der ersten stabilen Position und der zweiten stabilen Position und der dritten stabilen Position hin und her überführbar ist.

Die erfindungsgemässe Fördereinheit weist in einer Weiterbildung ein Transportelement auf, wobei das Transportelement eine erste Transporttasche aufweist, welche einen Tragebeutel als Aufnahmefach für Fördergüter ausbildet. Solche Transporttaschen werden insbesondere auch als «Soft Pouch» bezeichnet.

Die erfindungsgemässe Fördereinheit weist in einer Weiterbildung ein Transportelement auf, wobei das Transportelement eine zweite Transporttasche aufweist, die eine Gelenktasche als Aufnahmefach für Fördergüter ausbildet.

Eine Transporttasche, insbesondere die erste Transporttasche mit einem Tragebeutel, zeichnet sich insbesondere dadurch aus, dass die Transporttasche eine Rahmenstruktur, insbesondere die eingangs genannte Rahmenstruktur, enthält, an der die Enden einer Bahn aus Flächenmaterial, wie Gewebebahn, befestigt sind, welche eine Trageschlaufe ausbildet. Ein Ende der genannten Bahn aus Flächenmaterial kann an der unteren Querstrebe und das andere Ende der Bahn kann an der oberen Querstrebe der Rahmenstruktur befestigt sein.

Die Transporttasche kann mit gewebeartigen Seitenwänden ausgestattet sein und so eine Transporttasche mit einem Tragebeutel ausbilden. Die Trageschlaufe bildet insbesondere eine vor- und nachlaufende bzw. vordere und hintere Taschenwand sowie einen Taschenbodenabschnitt aus. Die Transporttasche kann ferner mit flexiblen, wie netzartigen oder gewebeartigen, Seitenwänden ausgestattet sein.

Eine Transporttasche, insbesondere die zweite Transporttasche, mit einer Gelenktasche zeichnet sich insbesondere dadurch aus, dass die Transporttasche feste Wände, wie eine vor- und nachlaufende bzw. vordere und hintere Taschenwand sowie einen Taschenbodenabschnitt, aufweist, die gelenkig miteinander verbunden sind. Die Transporttasche kann mit flexiblen, insbesondere netzartigen oder gewebeartigen Seitenwänden ausgestattet sein und trotzdem eine formstabile Transporttasche ausbilden.

Eine «Soft Pouch», insbesondere deren vor- und nachlaufende bzw. vordere und hintere Taschenwände sowie der Taschenbodenabschnitt besteht bzw. bestehen aus flexiblem, biegeschlaffem Material wie beispielsweise Gewebematerial. Deshalb ist die vorgenannte erste Transporttasche insbesondere eine «Soft Pouch».

Die erste Transporttasche, wie «Soft Pouch», kann nach unten entleerbar ausgebildet sein. Hierzu kann z. B. vorgesehen sein, dass das eine Ende der flächenförmigen Materialbahn von der Rahmenstruktur lösbar angeordnet ist. Hierzu kann z. B. eine Trageschlaufe, über welche die flächenförmigen Materialbahn an der Rahmenstruktur befestigt ist, von der Rahmenstruktur abnehmbar ausgebildet sein. So lässt sich die Trageschlaufe z. B. über einen Klett- oder Druckknopfverbindung reversibel öffnen und verschliessen. Alternativ kann die flächenförmige Materialbahn z. B. über eine Trageschlaufe an einer von der Rahmenstruktur wegnehmbaren Tragestange befestigt sein. Auf diese Weise lässt sich die Materialbahn unter Freigabe einer Öffnung wegschwenken. Die Tragestange kann z. B. in der Rahmenstruktur eingehängt sein.

Die erfindungsgemässe Fördereinheit weist ein Transportelement auf, wobei das Transportelement mindestens, insbesondere exakt, zwei Transporttaschen aufweist. Eine der Transporttaschen ist mit einer formstabilen, festen Taschenwand, insbesondere einer formstabilen, festen vor- und nachlaufenden bzw. vorderen und hinteren Taschenwand sowie insbesondere auch einem formstabilen, festen Taschenbodenabschnitt ausgestattet, welche insbesondere zumindest teilweise aus einer Hohlkammerplatte bestehen.

Eine «Hard Pouch», insbesondere deren vor- und nachlaufende bzw. vordere und hintere Taschenwand, besteht bzw. bestehen insbesondere aus formstabilem, festem Material, wie beispielsweise Kunststoff, somit ist die zweite Transporttasche eine «Hard Pouch».

Gemäss einer Weiterbildung der zweiten Transporttasche, insbesondere der «Hard Pouch» besteht auch der insbesondere gelenkig mit der vorderen und hinteren Taschenwand verbundene Taschenbodenabschnitt aus einem formstabilen, festen Material. Der Taschenbodenabschnitt kann aber auch aus einem flexiblen Flächenmaterial wie, Gewebe, Netz oder Kunststoff, bestehen.

Gemäss einer Weiterbildung der zweiten Transporttasche, insbesondere der «Hard Pouch», ist diese nach unten entleerbar. Die zweite Transporttasche weist insbesondere eine Taschenbodenklappe auf, welche geöffnet werden kann, und welche den Taschenbodenabschnitt ausbildet.

Die erfindungsgemässe Fördereinheit weist ein Transportelement auf, wobei das Transportelement mindestens, insbesondere exakt zwei Transporttaschen aufweist, wobei eine Transporttasche mit einer flexiblen, biegeschlaffen Taschenwand, insbesondere umfassend die vor- und nachlaufende bzw. vordere und hintere Taschenwand sowie den Taschenbodenabschnitt, ausgestattet ist, welche zumindest teilweise aus einer Bahn aus Flächenmaterial, wie Gewebebahn, bestehen.

Das Transportelement kann also insbesondere aus einer «Soft Pouch» und einer «Hard Pouch» bestehen. Dies hat den Vorteil, dass mit einer Transporteinheit unterschiedlichste Fördergüter gefördert werden können. So kann die «Soft Pouch» für spezielle Fördergüter für die «Soft Pouch» eingesetzt werden und die «Hard Pouch» kann für spezielle Fördergüter für die «Hard Pouch» eingesetzt werden. So können in der gleichen Hängeförderanlage mehr verschiedenartige Fördergüter mit denselben Fördereinheiten gefördert werden. Damit kann die Kapazität der Hängeförderanlage deutlich erweitert werden.

Die erfindungsgemässe Fördereinheit weist also ein Transportelement auf, wobei das Transportelement unterschiedliche Typen von Transporttaschen aufweist.

Die erfindungsgemässe Fördereinheit bzw. das dazugehörige Transportelement weist insbesondere Transporttaschen, wie eine erste und zweite Transporttasche, auf, wobei die Transporttaschen je eine hintere Taschenwand und eine vordere Taschenwand umfassen, die über einen Taschenbodenabschnitt derart flexibel miteinander verbunden sind, dass sie zwischen einem ersten Zustand, in welcher sie eine oben offene und von oben befüllbares Aufnahmefach ausbildet, und einem zweiten Zustand, in welcher sie dicht bzw. kompakt nebeneinander liegen, eine zusammengefaltete Transporttasche ausbilden. Diese Zustände sind insbesondere durch hin und her bewegen erreichbar, bzw. durch auf und ab bewegen eines Rahmens der Transporttasche erreichbar, welcher eine Taschenöffnung ausbildet.

Die beiden Transporttaschen sind insbesondere mit ihren hinteren Taschenwänden einander zugewandt. Die beiden Transporttaschen liegen insbesondere über die hintere Taschenwand einander an.

Die erfindungsgemässe Fördereinheit mit mindestens, insbesondere exakt zwei Transporttaschen bildet für jede Transporttasche jeweils ein Aufnahmefach für Fördergüter aus, wobei jedes Aufnahmefach der mindestens zwei Transporttaschen mindestens ein Fördergut aufnehmen kann.

Eine z. B. an der Förderschiene angeordnete Drehvorrichtung der Förderanlage zum Drehen der Transportelemente von Fördereinheiten, dreht die Transportelemente um ihre vertikale Drehachse bzw. um die Mittelängsachse der Transportelemente.

Die Drehvorrichtung zeichnet sich dadurch aus, dass schaltbare Einwirkelemente so in den Weg bzw. Förderkorridor der Transportelemente einbringbar sind, dass sich die Transportelemente in Förderrichtung um ihre vertikale Achse nach rechts oder nach links drehen, bevor die Transporttaschen eine Beladeposition in einer Beladestation der Förderanlage erreichen.

Eine Beladevorrichtung kann zum Beladen der Transportelemente mit Fördergütern in der Förderanlage vorgesehen sein, wobei die Beladung mit den Fördergütern quer zur Förderrichtung des Förderelementes, insbesondere von der Seite, erfolgt. Die Transportelemente werden vor dem Beladen in der Beladestation mit der Drehvorrichtung um ihre vertikale Achse in die zum Beladen vorgesehene Ausrichtung gedreht.

Eine erfindungsgemässe Förderanlage zum geführten, hängenden Transport von Fördereinheiten ist mit Transportelementen in Form von Transporttaschen, die entlang einer Förderschiene geführt werden ausgestattet, wobei die schienengeführte Förderanlage mit mindestens einer Fördereinheit mit zwei unterschiedlichen Typen von Transporttaschen ausgestattet ist.

Die Transporttasche für Fördereinheiten bzw. die Fördereinheit kann im oberen Teil der Rahmenstruktur bzw. des Tragrahmens einen Aufhängehaken aufweisen, der wiederum insbesondere als Öse ausgebildet ist, wobei diese Öse des Aufhängehakens rechtwinklig gegenüber dem Tragrahmen der Transporttasche verdreht ist.

Der Aufhängehaken kann auch beweglich an der Rahmenstruktur bzw. am Tragrahmen angebracht sein. In diesem Fall sind Rahmenstruktur bzw. Tragrahmen und Aufhängehaken zwei separate Teile die sich insbesondere gegenseitig verdrehen oder verschwenken lassen können.

Die Steuerungseinrichtung der Förderanlage steuert den ganzen Ablauf der Vorrichtungen. So kann zusätzlich eine Steuerungszentrale vorhanden sein, die dazu ausgestattet ist die Warenflüsse innerhalb der Förderanlage zu steuern.

Die Steuerungseinrichtung steuert insbesondere auch eine Stopp- und Freigabevorrichtung der Förderanlage, um die Fördereinheiten einerseits anhalten zu können, aber andererseits um die Fördereinheiten für die Förderung auch frei geben zu können.

Die Erfindung ist für eine Förderanlage mit Aussenläufer als Laufwagen beschrieben. Selbstverständlich eignet sich die erfindungsmässige Förderanlage auch für Innenläufer als Laufwagen der Förderanlage, womit diese Erfindung auch eine Innenläuferanlage mitumfasst.

Eine Fördereinheit kann wie erwähnt mehrere Transporttaschen für Fördergüter aufweisen, insbesondere verschiedene Transporttaschen für unterschiedliche Arten von Fördergüter. Ein Transportelement einer Fördereinheit kann zwei unterschiedliche Transporttaschen aufweisen, die jeweils unterschiedliche Warentypen aufnehmen können, bzw. daraus bestehen. Eine Fördereinheit kann exakt ein Transportelement umfassen.

Die Aufnahmeplätze bzw. Aufnahmefächer der Transporttaschen können verschliessbar sein. Das Fördergut wird insbesondere tragend gehalten und gefördert.

Das Fördergut kann aber auch während der Förderung klemmend gehalten werden. Das Fördergut kann während der Förderung klemmend zwischen der Vorderwand und der Rückwand gehalten gefördert werden. Dies trifft insbesondere auf eine Klemmtasche zu.

Mit Hilfe einer Drehvorrichtung können Transporttaschen in Förderrichtung betrachtet entweder nach links oder nach rechts gedreht werden. Somit können mittels einer Beladevorrichtung verschiedene Transporttaschen mit Fördergütern befüllt werden. Es können auch insbesondere verschiedene Aufnahmefächer mit Fördergütern beladen werden.

Die Rahmenstruktur kann wie erwähnt als Tragrahmen insbesondere der Transporttasche ausgebildet sein. Die Rahmenstruktur kann insbesondere als Tragrahmen der ersten Transporttasche ausgebildet sein, welche z. B. eine «Soft Pouch» ist.

Die Rahmenstruktur bzw. der Tragrahmen kann einteilig sein oder aber mehrteilig aufgebaut sein. Der Tragrahmen ist insbesondere ein Synonym für die Rahmenstruktur, welche eine rahmenartige Struktur aufweist. Die Rahmenstruktur bzw. der Tragrahmen kann insbesondere einerseits über den Aufhängehaken an den Traghaken eingehängt werden. Andererseits bildet die Rahmenstruktur bzw. der Tragrahmen einen Rahmen, an dem die Trageschlaufe des Taschenbeutels z. B. der ersten Transporttasche befestigt ist.

Die Rahmenstruktur bzw. der Tragrahmen kann überdies eine, z. B. rechteckförmige, Beladeöffnung der entsprechenden Transporttasche ausbilden.

Erfindungsgemässe Transportelemente können aber auch Transportkörbe sein bzw. umfassen, die Fördergüter befördern. So weisen Transportkörbe in der Regel Ablegestellen auf, an denen die Fördergüter abgelegt werden können. Auch diese Transportkörbe können für die Beladung oder zur Entladung gedreht und ausgerichtet werden. Die Transportkörbe sind z. b. zweite Transporttaschen.

Hängeförderanlagen können Teilanlagen von Förderanlagen sein. Somit sind Förderanlagen übergeordnete Anlagen die auch Liegeförderer Lager, Palettenlager, Hochregallager und auch Materialflussrechner umfassen können.

Eine Fördereinheit besteht insbesondere aus einem Förderelement in Form eines Rollwagens bzw. Laufwagens und einem Transportelement mit mindestens zwei Transporttaschen, welche Stückgüter zum Transport aufnehmen können.

Stückgüter können Waren, Artikel, Konsumgüter, Einzelteile aber auch kleinere Gebinde sein. Stückgüter unterscheiden sich deutliche von ihrer Grösse, ihrer inneren Beschaffenheit und ihrem Gewicht und ihrer Empfindlichkeit auf Druck und ihrem Handhabungsaufwand.

Die Transporttaschen können Stückgüter an Beladestationen automatisiert aufnehmen und an Entladestationen automatisiert abgeben.

Ein wesentlicher Aspekt der Erfindung betrifft auch eine Förderanlage, die wenigstens eine Hängeförderanlage umfasst, welche mindestens eine Fördereinheit zur Förderung von Fördergütern einsetzt, wie sie oben beschrieben ist. Die Förderanlage kann darüber hinaus beispielsweise eine Förderstrecke, Puffer für leere Fördereinheiten, Antriebseinheiten für die Fördereinheiten, Stoppvorrichtung für Fördereinheiten, Sortiersysteme wie beispielsweise einen Matrixsortierer, schaltbare Weichen, Pufferspeicher, Beladestationen, Entladestationen, Messstation für Fördereinheiten bzw. Fördertaschen, Umlaufförderer, Palettiervorrichtungen, Speditionen, Versandplätze, Identifikationsvorrichtungen und Steuerungseinrichtungen aufweisen.

Nachfolgend wird der Erfindungsgegenstand anhand von Ausführungsbeispielen, welche in den beiliegenden Figuren dargestellt sind, näher erläutert.
- Figur 1: zeigt eine Fördereinheit in Seitenansicht, bestehend aus einem Förderkettenglied und einem Transportelement, welches aus zwei Transporttaschen besteht.
- Figur 2: zeigt eine Fördereinheit in Seitenansicht, die in einer Hängeförderanlage eingesetzt wird, bestehend aus einem Laufwagen und einem Transportelement welches aus zwei Transporttaschen besteht.
- Figur 3: zeigt in einer perspektivischen Ansicht einen Laufwagen in einer Förderschiene angeordnet mit einem Transportelement am Traghaken des Laufwagens.
- Figur 4: zeigt in einer perspektivischen Ansicht einen Laufwagenwagen nach Figur 3 in vergrösserter Darstellung.
- Figur 5: zeigt eine Fördereinheit in Draufsicht, die in einer Hängeförderanlage eingesetzt wird.
- Figur 6: zeigt eine weitere Fördereinheit in Seitenansicht, wobei die zweite Transporttasche als Transportkorb ausgebildet ist.
- Figur 7: zeigt eine weitere Fördereinheit in Seitenansicht, wobei die zweite Transporttasche als Klemmtasche ausgebildet ist.
- Figur 8: zeigt schematisch eine Förderanlage, in der die Fördereinheiten für die Förderung von Fördergüter eingesetzt werden.

Die nachfolgend beschriebenen Ausführungsbeispiele stehen lediglich beispielhaft für den Erfindungsgegenstand und haben keine beschränkende Wirkung. Grundsätzlich sind in den Figuren gleiche Teile mit gleichen Bezugszeichen versehen.

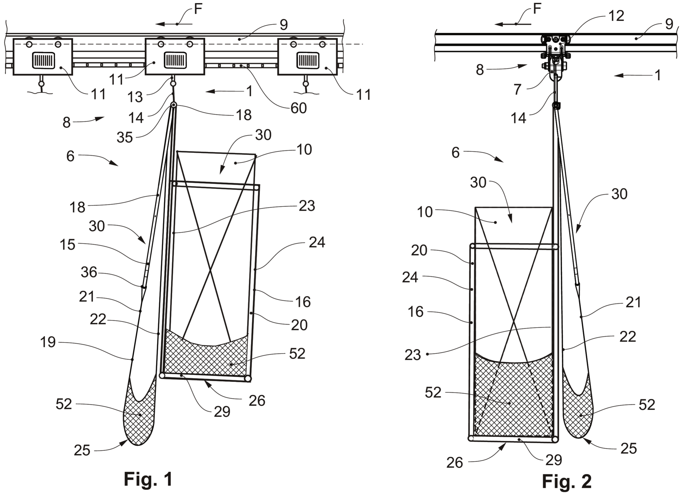

Die **Figur 1** zeigt eine Fördereinheit 1 mit einem Fördergut 10 in der Seitenansicht. Die Fördereinheit 1 besteht aus einem Förderelement 8 in Form eines Förderkettenglieds 11 und einem Transportelement 6. Die einzelnen Förderkettenglieder 11 sind mittels einer Kette 60 miteinander verbunden, wobei die Kette 60 mit den Förderkettengliedern 11 einen endlosen Rundlauf ausbildet. Die Förderkettenglieder 11 sind mit Identifikationsetiketten 5 versehen, um eine eindeutige Zuordnung der Transporttaschen 15, 16 über die Förderkettenglieder 11 zu ermöglichen.

Das Transportelement 6 besteht aus zwei Transporttaschen 15, 16, wobei die erste Transporttasche 15 aus einem flexiblen, biegeschlafen Material besteht und die zweite Transporttasche 16 aus einem formstabilen, festen Material besteht. Die erste Transporttasche 15, umfasst eine Rahmenstruktur 18, an welcher eine Gewebeschlaufe, die als Trageschlaufe 19 ausgebildet ist, befestigt ist. Das obere Ende dieser Gewebeschlaufe ist an einer oberen Querstange des Tragerahmens bzw. der Rahmenstruktur 18 befestigt. Das andere Ende der Gewebeschlaufe ist an einer unteren Querstange der Rahmenstruktur 18 der Transporttasche 15 befestigt.

Das Förderelement 8 besteht aus einem Förderkettenglied 11 mit einem Traghaken 13 an denen die zwei Fördertaschen 15, 16 bzw. Transporttaschen angehängt werden.

Das Förderkettenglied 11 läuft geführt in einer Förderschiene 9 in Förderrichtung F. Der Tragrahmen 18 der ersten Transporttasche 15 bildet am oberen Ende eine schlaufenförmige Öse aus, die als Aufhängehaken 14 der ersten Transporttasche 15 bzw. des Transportelementes 6 genutzt wird. Der Aufhängehaken 14 des Tragrahmens 18 der ersten Transporttasche 15 ist in dem Traghaken 13 des Förderkettengliedes 11 eingehängt. Die zweite Transporttasche 16 ist an dem Tragrahmen 18 der ersten Transporttasche 15 befestigt, in der Art, dass ihre beiden Taschenrückwände aneinander liegen.

Die beiden Taschenrückwände zeichnen sich dadurch aus, dass sie keine Beladeöffnungen besitzen. Die Verbindung der beiden Transporttaschen kann auch über Gewebelaschen an den Tragrahmen 18 erfolgen. Die Taschenwand 23 kann vorteilshalber mittels Nähte 54 an den Gewebelaschen befestigt sein.

Die Rahmenstruktur, bzw. der Tragrahmen 18 der ersten Transporttasche 15 besteht aus einem geformten Draht, der einen geschlossenen Rahmen ausbildet, welcher die Form eines Drahtbügels entspricht. Das obere Ende des Aufhängehakens 14, also die Öse, ist vorteilshaft um 90° zur Rahmenstruktur 18 bzw. dem Tragrahmen 18 verdreht. Der Drahtbügel bildet die Taschenöffnung 30 aus, durch welche die erste Transporttasche 15 mit Fördergüter 10 wie bspw. Artikel befüllt werden kann. Hinter der Taschenöffnung 30 befindet sich die hintere Taschenwand 22, welches die Rückwand der ersten Transporttasche 15 ausbildet. Die vordere Taschenwand 21 ist an einer unteren Kante 36 des Tragrahmens 18 befestigt und bildet die vordere Taschenwand 21 der Transporttasche 15 aus. Die vordere Taschenwand 21 ist hier in Förderrichtung F die vorlaufende Taschenwand. Die hintere Taschenwand 22 ist hier in Förderrichtung F die nachlaufende Taschenwand. Die beiden Taschenwände 21, 22 werden nach unten mittels des Taschenbodenabschnittes 25 miteinander verbunden. Der Raum, der begrenzt wird zwischen der vorderen Taschenwand 21, der hinteren Taschenwand 22 und dem Taschenbodenabschnittes 25 ist ein Aufnahmefach und wird zum Aufnehmen von Fördergüter 10 genutzt.

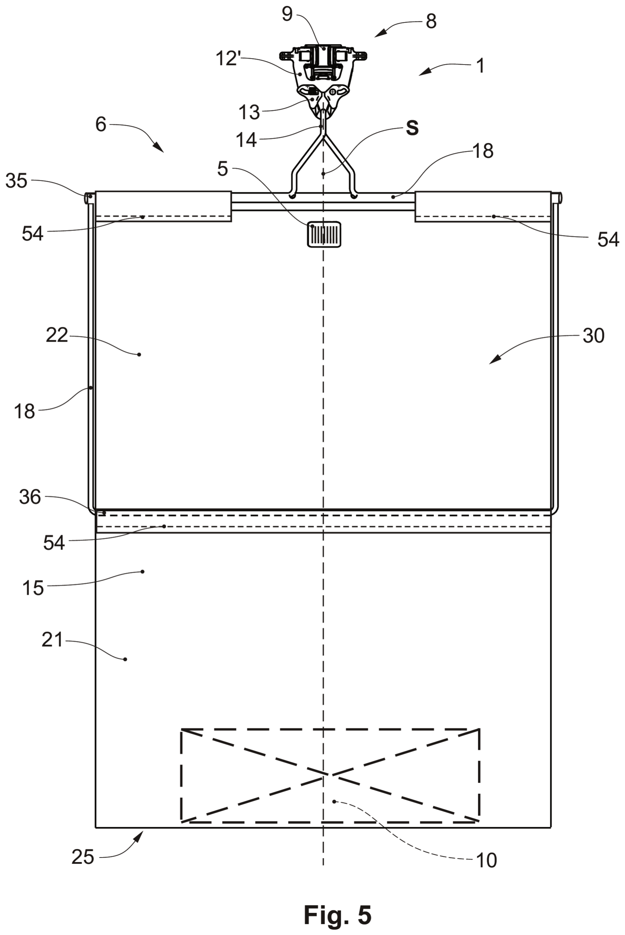

Die zweite Transporttasche 16 ist an der ersten Transporttasche 15 in der Weise angeordnet, dass die Taschenrückwände aneinander liegen. Die zweite Transporttasche 16 hat ein Aufnahmefach für Fördergüter 10. Das Transportelement 6 weist eine vertikale Drehachse S (siehe Figur 5) in ihrer Mitte auf, welche insbesondere in der Mittelängsachse der Transporttasche liegt, und um welche die beiden Transporttaschen 15, 16 gedreht werden können, beziehungsweise geschwenkt werden können. Die Transporttaschen 15, 16 können über das Förderkettenglied 11 mittels der Kette 60 und einer Antriebvorrichtung angetrieben werden, die Antriebsvorrichtung ist hier nicht gezeigt.

Die zweite Transporttasche 16 besteht aus formstabilen, festen Taschenwänden 23, 24 die über gelenkige Verbindungen mit dem Taschenbodenabschnitt 26 miteinander verbunden sind und eine Gelenktasche 20 ausbilden. Zwischen den verschwenkbaren Taschenwänden 23, 24 sind gelenkige Streben angeordnet, so dass die Taschenwände gegenseitig verschoben werden können. Hierbei bleiben die Taschenwände 23, 24 annähernd parallel. Zwischen den beiden Taschenwänden 23, 24 entsteht im oberen Bereich, beim Öffnen der zweiten Transporttasche 16, eine Beladeöffnung 30, wenn die beiden Taschenwände 23, 24 auseinander bewegt werden.

Beide Transporttaschen 15, 16 besitzen Seitenwände 52 aus einem netzartigen Material. Dieses netzartige Material lässt sich strecken und passt sich den Bewegungen sowie den unterschiedlichen Beladezuständen der Transporttaschen an.

**Figur 2** zeigt eine Fördereinheit 1 mit einem Fördergut 10 in der Seitenansicht. Die Fördereinheit 1 besteht aus einem Förderelement 8 in Form eines Laufwagens 12 und einem Transportelement 6, wie es auch in der Figur 1 gezeigt ist. Der Laufwagens 12 läuft geführt in einer Förderschiene 9 in Förderrichtung F. Die Rahmenstruktur 18 der ersten Transporttasche 15 bildet am oberen Ende eine schlaufenförmige Öse aus, die als Aufhängehaken 14 der ersten Transporttasche 15 bzw. des Transportelementes 6 genutzt wird. Der Aufhängehaken 14 der Rahmenstruktur 18 der ersten Transporttasche 15, ist in eine Halterung 7 des Laufwagens 12 eingesetzt bzw. eingehängt. Die beiden Transporttaschen 15 und 16 sind an ihren Rückwänden miteinander liegend bzw. einander anliegend. Die Verbindung erfolgt über den Tragrahmen 18 in dem die Rückwände über Gewebelaschen am Tragrahmen 18 befestigt sind. Die Transporttaschenwand 23 kann vorteilshalber mittels Nähten 54 an den Gewebelaschen befestigt sein. Die Halterung 7 ist an dem Laufwagen 12 befestigt. Die bügelartige Rahmenstruktur 18 ist in der Halterung 7 schwenkbar gelagert, so dass das Transportelement 6 in der Halterung 7 hin und her schwingen kann. Die Halterung 7 besitzt ferner ein internes Drehgelenk, so dass das Transportelement 6 auch um seine vertikale Drehachse S drehen kann.

In Figur 2 ist die zweite Transporttasche 16 im Unterschied zur Figur 1 die vorlaufende Transporttasche und die erste Transporttasche 15 ist die nachlaufende Transporttasche. Die vorlaufende zweite Transporttasche 16 besteht aus einem formstabilen festen Material. Vorteilhafterweise besteht sie aus einem Metallrahmen mit Hohlkammerplatte als Füllmaterial. Die einzelnen Transporttaschenteile, wie Taschenvorderwand 24, Taschenrückwand 23 und dem Taschenbodensegment 26 bzw. -abschnitt, sind über Gelenkverbindungen 29 miteinander verbunden. Am oberen Ende der Taschenwand 24 wird eine Taschenöffnung 30 ausgebildet in die ein Transportgut 10 eingefüllt ist.

Auch in Figur 2 sind beide Transporttaschen 15, 16 mit Seitenwände 52 aus einem netzartigen Material ausgestattet. Dieses netzartige Material lässt sich strecken und passt sich den Bewegungen sowie den unterschiedlichen Beladezuständen der Transporttaschen 15, 16 an.

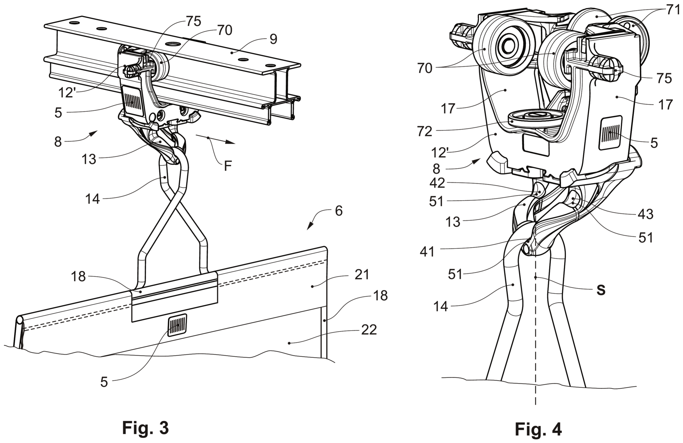

**Figur 3** und **Figur 4** zeigen einen Laufwagen 12', der mit einem Traghaken 13 ausgestattet ist, jeweils in perspektivischer Ansicht. Dieser Laufwagen 12' besteht aus einem U-förmigen Grundkörper, der zwei Laufwagenschenkel 17 ausbildet. An den beiden Laufwagenschenkeln 17 sind je eine Tragrolle 70 innenseitig angeordnet. Die Tragrollen 70 übernehmen die Traglast des Fördergutes 10. Hinter den beiden Tragrollen 70 sind zwei Stützrollen 71 angeordnet, die fluchtend zu den Tragrollen 70 orientiert sind. Tragrollen 70 und Stützrollen 71 laufen in der Förderschiene 9, so dass der Laufwagen 12' als Aussenläufer ausgebildet ist. Unterhalb der Tragrollen 70 und den Stützrollen 71 sind zwei Führungsrollen 72 so hintereinander angeordnet, dass Ihre Drehachsen orthogonal zu den Drehachsen der Tragrollen 70 und Stützrollen 71 orientiert sind. Die Führungsrollen 72 dienen zu seitlichen Führung des Laufwagens 12'. Der Laufwagen 12' weist seitlich an den Laufwagenschenkeln 17 jeweils ein Mitnahmebolzen 75 auf, der am Laufwagenschenkel 17 nach aussen absteht. An den Mitnahmebolzen 75 kann der Laufwagen 12' mit Hilfe von Mitnahmeelemente angetrieben werden, hier nicht gezeigt.

In Figur 3 und Figur 4 sind unterhalb des Laufwagens 12' je ein Traghaken 13 am Laufwagen 12' befestigt. Die Befestigung ist hier über eine Schwalbenschwanzführung realisiert, die über eine Schnappverbindung gesichert ist. Die Verbindung zwischen Laufwagen 12' und Traghaken 13 lässt sich wieder lösen. In Figur 3 und 4 ist in den Traghaken 13 ein Aufhängehaken 14 eingesetzt bzw. eingehängt. Die schlaufenförmige Öse des Aufhängehakens 14 liegt in der ersten stabilen Position 41 des Traghakens. Eine erste stabile Position 41 bzw. Auflagestelle des Traghakens 13 zeichnet sich dadurch aus, dass die Transporttasche 30 unterhalb des Aufhängehakens 14 rechtwinkelig zur Förderrichtung F des Laufwagens 12' ausgerichtet ist. Ein Verdrehen oder Schwenken des Transportelementes 6 um die vertikale Drehachse S führt zu einem Herauswinden des Aufhängehakens 14 der Transporttasche 15 aus der ersten stabilen Position bzw. Auflagestelle 41 des Traghakens 13.

Ein Drehen des Tragrahmens 18 des Transportelementes 6 entgegen der Uhrzeigerrichtung führt dazu, dass die Öse des Aufhängehakens 14 sich aus der ersten stabilen Position bzw. 41 bzw. Auflagestelle herauswindet und sich entlang eines Verbindungssegmentes nach links aufwärtsschiebt, bis die Öse des Aufhängehakens 14 eine zweite stabile Position 43 bzw. Auflagestelle erreicht, wo die Öse zumindest temporär in einer Vertiefung 51 an der zweiten stabilen Auflagestelle 43 gehalten werden kann. Durch die Verdrehung des Tragrahmens 18 der Transporttasche 15 bzw. des Tragelements 6 ist die Ausrichtung der Transporttasche 15 bzw. des Transportelements 6 nun parallel zur Förderrichtung F des Laufwagens 12'. Die Taschenöffnung 30 ist in Förderrichtung F des Laufwagens 12' betrachtet, nach links ausgerichtet. Die Transporttasche 15 bzw. das Transportelement 6 kann nun zum Beispiel von links befüllt werden.

Ein Drehen des Tragrahmens 18 des Transportelementes 6 in Uhrzeigerrichtung führt dazu, dass die Öse des Aufhängehakens 14 sich aus der ersten stabilen Position 41 bzw. Auflagestelle herauswindet und sich entlang eines Verbindungssegmentes nach rechts aufwärtsschiebt, bis die Öse des Aufhängehakens 14 eine dritte stabile Position 42 bzw. Auflagestelle erreicht, wo die Öse zumindest temporär in einer Vertiefung 51 an der dritten stabilen Auflagestelle 43 gehalten werden kann. Durch die Verdrehung des Tragrahmens 18 der Transporttasche 15 bzw. des Transportelements 6 ist die Ausrichtung der Transporttasche 15 bzw. des Transportelements 6 nun auch parallel zur Förderrichtung F des Laufwagens 12'. Die Taschenöffnung 15 ist in Förderrichtung F des Laufwagens 12' nach rechts ausgerichtet. Die Transporttasche 15 bzw. das Transportelement 6 kann nun zum Beispiel von rechts befüllt werden.

Der Traghaken 18 besitzt drei Vertiefungen 51, welche die erwähnten stabilen Positionen bzw. Auflagestellen für den Aufhängehaken 14 ausbilden, in denen der Aufhängehaken 14 eine stabile Lage einnehmen kann. In jeder der drei stabilen Lagen (41, 42, 43) hat die Transporttasche 15 eine andere Ausrichtung zur Förderrichtung F des Laufwagens 12'. Durch die unterschiedlichen Ausrichtungen der Transporttasche 30 lassen sich unterschiedliche Operationen mit der Transporttasche 15 durchführen.

An der Rückseite der ersten Transporttasche 15 ist die zweite Transporttasche 16 befestigt, so dass die Taschenrückseiten beider Transporttaschen 15, 16 aneinander liegen. Die zweite Transporttasche 16 ist an einer oberen Kante 35 des Tragrahmens 18 an der ersten Transporttasche 15 befestigt. Dreht sich die erste Transporttasche 15 in Förderrichtung F betrachtet nach links, so dreht sich die zweite Transporttasche 16 in Förderrichtung betrachtet nach rechts. Die Laufwagen 12' in den Figuren 3 und Figur 4 sind mit Identifikationsetiketten 5 versehen.

Die **Figur 5** zeigt die Fördereinheit 1 aus Figur 3 und Figur 4 in der Draufsicht bzw. Frontansicht. Die Fördereinheit 1 ist mit ihrem Laufwagen 12' in der Laufschiene 9 eingesetzt und bewegt sich längs dieser Laufschiene 9 entlang. Der Laufwagen 12' ist mit einem Traghaken 13 ausgestattet, in dem der Aufhängehaken 14 des Transportelementes 6 eingesetzt bzw. eingehängt ist. Der Aufhängehaken 14 ist Teil des Tragrahmen 18, welcher aus einem Drahtmaterial besteht. Der Tragrahmen 18 besitzt eine obere Kante 35 in Form einer oberen Querstrebe und eine untere Kante 36 in Form einer unteren Querstrebe. An die obere Kante 35 ist die Taschenrückwand 22 der ersten Transporttasche 15 mittels Nähten 54 angenäht und an der unteren Kante 36 ist Taschenvorderwand 21 der ersten Transporttasche 15 auch mittels Nähte 54 angenäht. Die Taschenvorderwand 21 ist die vorlaufende Taschenwand 21. Die beiden Taschenwände 21, 22 bilden eine Trageschlaufe der ersten Transporttasche 15 aus, die am Boden mittels eines Taschenbodenabschnittes 25 verbunden werden.

An der nachlaufenden Taschenwand 22 der ersten Transporttasche 15 ist ein Identifikationsetikett 5 angebracht. Das Transportelement 6 besteht aus zwei Transporttaschen 15 und 16. Die zweite Transporttasche 16 ist in Figur 5 allerdings von der ersten Transporttasche 15 verdeckt.

Der Tragrahmen 18 kann mit seinem Aufhängehaken 14 im Traghaken 13 gedreht werden. Wird der Tragrahmen 18 in Richtung der vorlaufende Taschenwand 21 geschwenkt, bzw. gedreht, wird die Taschenöffnung 30 geöffnet, so dass ein Fördergut 10 in die Taschenöffnung 30 in die erste Transporttasche 15 eingebracht werden kann. In Figur 5 ist ein Fördergut 10 im Aufnahmeraum der Transporttasche 15 eingebracht und von der Taschenvorderwand 21 verdeckt, aus diesem Grund ist das Fördergut 10 gestrichelt dargestellt.

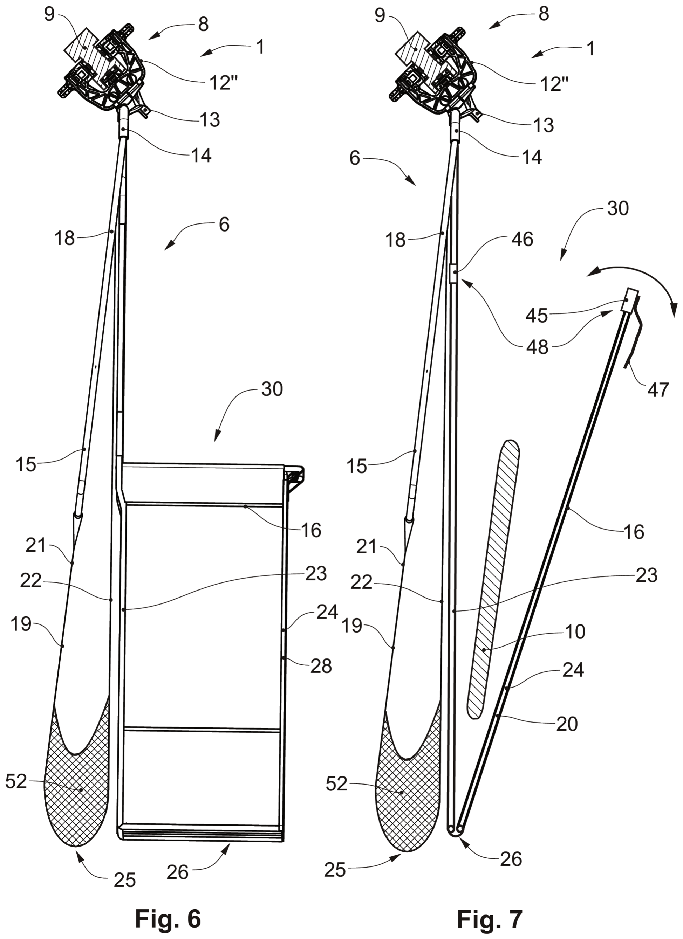

Die **Figur 6** zeigt ein Fördereinheit 1, welche aus einem Laufwagen 12" und einem Transportelement 6 besteht. Der Laufwagen 12" läuft entlang einer Förderschiene 9 in Förderrichtung entlang. Der Laufwagen 12" ist als Spritzgussteil ausgeführt und besitzt einen Traghaken 13, der für den Aufhängehaken 14 zwei stabile Positionen aufweist. Das Transportelement 6 besteht aus der ersten Transporttasche 15 mit weichen, biegeschlaffen Taschenwänden 21, 22 und der zweiten Transporttasche 16 aus formstabilem, festem Material, welche in Figur 6 als Transportkorb 28 ausgestaltet ist. Die erste Transporttasche 15 ist in Förderrichtung F die vorlaufende Transporttasche und die zweite Transporttasche 16 ist in Förderrichtung F die nachlaufende Transporttasche.

Die erste Transporttasche 15 besteht aus einem Tragrahmen18 der an seinem oberen Ende ein Aufhängehaken 14 ausbildet, der im Traghaken 13 des Laufwagens 12" gelagert ist. Der Aufnahmeraum der ersten Transporttasche 15 wird durch eine Gewebebahn gebildet, die so am Tragrahmen 18 befestigt ist, dass eine Trageschlaufe 19 gebildet wird. Die zweite Transporttasche 16 ist an der oberen Kante 35 des Tragerahmens 18 angebracht. Die zweite Transporttasche 16 besteht aus formstabilen, festen Materialien.

In Figur 6 sind die Taschenwände aus Metallstreifen, Metalldrähten oder Metallbänder aufgebaut. Die zweite Transporttasche 16 ist als Transportkorb 28 oder Transportgestell ausgestaltet. Die zweite Transporttasche 16 besitzt eine immer bzw. permanent offene Taschenöffnung 30 zum Beladen des Transportkorbs 28.

Die **Figur 7** zeigt ein Fördereinheit 1, welche aus einem Laufwagen 12" und einem Transportelement 6 besteht. Der Laufwagen 12" läuft entlang einer Förderschiene 9 in Förderrichtung entlang. Der Laufwagen 12" ist als Spritzgussteil ausgeführt und besitzt einen Traghaken 13, der für den Aufhängehaken 14 zwei stabile Positionen aufweist. Das Transportelement 6 besteht aus der ersten Transporttasche 15 mit weichen, biegeschlaffen Taschenwänden 21, 22 und der zweiten Transporttasche 16 mit formstabilen festen Taschenwänden 23, 24, welche als Klemmtasche 20 ausgebildet ist. Die erste Transporttasche 15 ist in Förderrichtung F die vorlaufende Tasche und die zweite Transporttasche 16 ist in Förderrichtung F die nachlaufende Transporttasche.

Die erste Transporttasche 15 besteht aus einem Tragrahmen 18 der an seinem oberen Ende ein Aufhängehaken 14 ausbildet, der im Traghaken 13 des Laufwagens 12" gelagert ist. Der Aufnahmeraum der ersten Transporttasche 15 wird durch eine Gewebebahn gebildet, die so am Tragrahmen 18 befestigt, dass eine Trageschlaufe 19 gebildet wird. Die zweite Transporttasche 16 ist an der oberen Kante 35 des Tragerahmens 18 der ersten Transporttasche 15 angebracht.

Die zweite Transporttasche 16 besteht aus zwei Taschenwänden 23, 24 aus formstabilen, festen Materialien. Die Rückwand 23 ist etwas länger als die Vorderwand 24 und beide Taschenwände sind Hohlkammerplatten und bestehen aus Kunststoff. Beide Taschenwände 23, 24 sind im unteren Ende mittels eines Gewebestreifens schwenkbar verbunden, wobei der Gewebestreifen einen Taschenbodenabschnitt 26 ausbildet. Diese Transporttasche 16 ist als Gelenktasche 20 ausgebildet und eignet sich besonders dazu flache Gegenstände geklemmt zu fördern.

An der oberen Kante der kürzeren nachlaufenden Taschenwand 24 befindet sich eine Schliessvorrichtung 48, die als magnetisches Schliesselement 45 ausgebildet ist. An der anderen Taschenwand 23, der vorlaufenden Transporttaschenwand 23 ist ein magnetisches Gegenschliesselement 46 in korrespondierender Höhe zum Schliesselement 48 an der nachlaufenden Transporttaschenwand 24 angeordnet. Das Schliesselement 45 und Gegenschliesselement 46 bilden die Schliessvorrichtung 48 aus. Die Schliessverbindung bzw. Schliessvorrichtung 48 kann geöffnet werden, indem an einem Zugmittel 47 in Form eines Bandes gezogen wird. Beim Öffnen der Schliessverbindung 48 schwenkt die Taschenwand 24 auf, so dass der Aufnahmeraum für das Fördergut 10 geöffnet wird. Die Aufnahmeöffnung 30 bildet sich zwischen dem Schliesselement 45 und dem Gegenschliesselement 46, so dass der Aufnahmeraum befüllt werden kann. In der Regel wird das Fördergut 10 klemmend gefördert. Es ist aber auch möglich, dass die Transporttasche 16 netzartige Seitenwände aufweist, welche das Fördergut gegen ein Herausfallen sichern.

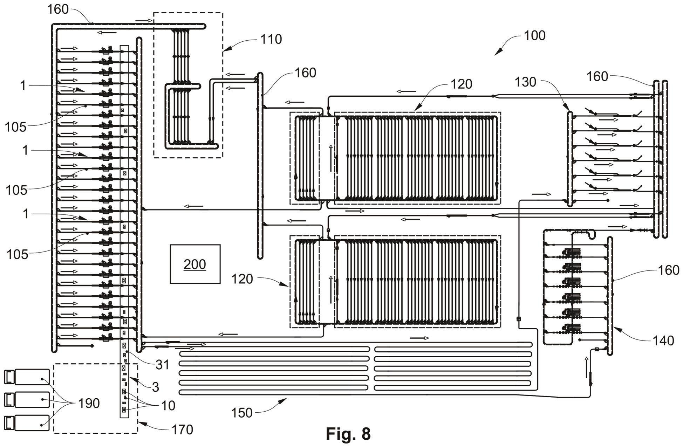

Die **Figur 8** zeigt eine Förderanlage 100, die dazu dient, Fördergüter 10 zu verarbeiten, wie beispielsweise in Kommissionierungszentren. Die Förderanlage 100 beinhaltet Beladestationen 130, in denen die Transporttaschen 15, 16 der Fördereinheiten 1 mit Fördergütern 10 beladen werden. Ein Matrixsorter 110 ist ebenfalls Teil der Förderanlage 100 und dient dazu, Fördergüter 10 in bestimmte Reihenfolgen zu sortieren. Ein Puffer 120 ist als Zwischenspeicher für Fördergüter 10 vorgesehen, um den Durchsatz der Förderanlage 100 zu optimieren, beziehungsweise die Verfügbarkeit einzelner Fördergüter 10 zu erhöhen. Entladestationen 105 sind vorhanden, an denen Fördergüter 10 in Lagerbehälter oder Transportbehälter in Form von Kisten oder Boxen geladen werden können. Die Förderanlage 100 wird gesteuert mittels der Steuereinrichtung 200, die alle Fördervorgänge überprüft, steuert und abwickelt. In der Förderanlage sind mehrere Umlaufförderer 160 eingesetzt, die die Fördergüter 10 in den Förderelementen 8 zu den einzelnen Anlagekomponenten 110, 120, 130, 140, 170 hin fördern.

Förderbehälter können zum Beispiel Hängefördertaschen 15, 16 eines Hängefördereranlage sein. Eine Retouren-Station 140 ist ebenfalls Teil dieser Förderanlage 100, an der zurückgegebene Fördergüter 10 von Kunden überprüft und in die Förderanlage eingespeist werden können.

Ein Leertaschenlager 150 ist ebenfalls Teil der Förderanlage 100 in diesem werden leere Transporteinheiten 1 für den Transport von Fördergütern 10 bereitgehalten und bei Bedarf aus dem Leertaschenlager 150 herausgefördert. Die Fördergüter 10 selbst werden in Förderbehälter in Form von Hängefördertaschen 15, 16 eingefüllt und entlang von Förderschienen 9 transportiert, um die Fördergüter 10 zu verschiedenen Verarbeitungsvorrichtungen 110, 120, 130, 140, 170 zu transportieren.

Transportbehälter wie zum Beispiel Kisten oder auch einzelne Fördergüter 10 werden mittels eines Liegewarenförderers 3 in Form eines Förderbandes 31 von den Abgabestationen 105 an die Spedition 170 gefördert. In der Spedition 170 erfolgt die Verladung der Fördergüter 10 in Lastkraftwagen 190 für den externen Transport.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. **Fördereinheit** (1) zum hängenden Transport von Fördergütern (10) in einer Förderanlage (100), insbesondere einer schienengeführten Förderanlage (100) oder einer Förderkettenanlage mit:
- einem Förderelement (8), insbesondere einem Laufwagen (12, 12', 12") oder einem Förderkettenglied, mit einem an diesem angebrachten ersten Verbindungsorgan, wie Traghaken (13), und mit
- einem Transportelement (6), welches mit einer Rahmenstruktur (18) ausgestattet ist, mit einem an der Rahmenstruktur (18) angebrachten zweiten Verbindungsorgan, wie Aufhängehaken (14),
wobei das erste Verbindungsorgan, wie Aufhängehaken (14), im zweiten Verbindungsorgan, wie Traghaken (13), des Förderelementes (8) hängend gelagert ist, und das Transportelement (6) aus mindestens zwei Transporttaschen (15, 16) besteht, wobei die Transporttaschen (15,16) in Fördererrichtung (F) jeweils eine vorlaufende und eine nachlaufende Taschenwand (21 22; 23, 24) aufweisen, die über einen Taschenbodenabschnitt (25, 26) miteinander verbunden sind,
**dadurch gekennzeichnet, dass**
die Taschenwände der zwei Transporttaschen (15, 16) aus unterschiedlichen Materialien bestehen, wobei das Taschenwandmaterial der ersten Transporttasche (15) aus einem weichen, biegeschlaffen Material besteht und das Taschenwandmaterial der zweiten Transporttasche (16) aus einem formstabilen, festen Material besteht.

2. Fördereinheit (1) nach Anspruch 1, **dadurch gekennzeichnet, dass** die Rahmenstruktur (18) aus einem Drahtmaterial geformt ist.

3. Fördereinheit (1) nach Anspruch 1 oder 2, **dadurch gekennzeichnet, dass** die beiden Transporttaschen (15, 16) über die Rahmenstruktur (18) miteinander verbunden sind.

4. Fördereinheit (1) nach einem der Ansprüche 1 bis 3, **dadurch gekennzeichnet, dass** das Taschenwandmaterial der ersten Transporttasche (15) aus einem Gewebe, einem Textilverbundstoff bzw. textile Flächengebilde, wie Vlies oder Filz, einem Folienmaterial, einem Gummi oder einem Silikongummi besteht.

5. Fördereinheit (1) nach einem der Ansprüche 1 bis 4, **dadurch gekennzeichnet, dass** das Taschenwandmaterial der zweiten Transporttasche aus Kunststoffmaterial oder einem Hohlkammermaterial oder einem Verbundmaterial oder einem Mehrschichtmaterial oder einem Metall besteht.

6. Fördereinheit (1) nach einem der Ansprüche 1 bis 5, **dadurch gekennzeichnet, dass** das Förderelement (8) mindestens ein, insbesondere zwei Identifikationsmittel (5) aufweist bzw. enthält, insbesondere auf dem Laufwagen (12, 12', 12").

7. Fördereinheit (1) nach einem der Ansprüche 1 bis 6, **dadurch gekennzeichnet, dass** die Fördereinheit für die beiden Transporttaschen (15, 16) des Transportelements (6) unterschiedliche Identifikationsmittel (5) aufweist bzw. enthält.

8. Fördereinheit (1) nach einem der Ansprüche 1 bis 7, **dadurch gekennzeichnet, dass** die beiden Transporttaschen (15, 16) des Transportelements (6) ein unterschiedliches Aufnahmevolumen für Fördergüter (10) aufweisen.

9. Fördereinheit (1) nach einem der Ansprüche 1 bis 8, **dadurch gekennzeichnet, dass** das Transportelement (6) eine vertikale Drehachse (S) aufweist, um welche beide Transporttaschen (15, 16) gemeinsam drehbar sind.

10. Fördereinheit (1) nach einem der Ansprüche 1 bis 9, **dadurch gekennzeichnet, dass** die beiden Transporttaschen (15, 16), in Förderrichtung (F) betrachtet, nach rechts gedreht werden können, um die zweite Transporttasche (16) zu beladen oder die beiden Transporttaschen (15,16), in Förderrichtung (F) betrachtet, nach links gedreht werden können, um die erste Transporttasche (15) zu beladen.

11. Fördereinheit (1) nach einem der Ansprüche 1 bis 10, **dadurch gekennzeichnet, dass** die erste Transporttasche (15) in Förderrichtung (F) die vorlaufende Transporttasche (15) ist und die zweite Transporttasche (16) die nachlaufende Transporttasche (16) ist.

12. Fördereinheit (1) nach einem der Ansprüche 1 bis 11, **dadurch gekennzeichnet, dass** die Rahmenstruktur (18) Teil der ersten Transporttasche (15) ist, und die erste Transporttasche (15) eine Bahn aus einem Flächenmaterial, wie Gewebebahn, umfasst, welche mit ihren Enden an der Rahmenstruktur (18) befestigt ist und eine Trageschlaufe ausbildet.

13. Fördereinheit (1) nach einem der Ansprüche 1 bis 12, **dadurch gekennzeichnet, dass** die Rahmenstruktur (18) eine obere Querstrebe (35) umfasst, und die erste und zweite Transporttasche (15, 16) an der oberen Querstrebe (35) befestigt sind, und insbesondere über die obere Querstrebe (35) miteinander verbunden sind.

14. Fördereinheit (1) nach einem der Ansprüche 1 bis 13, **dadurch gekennzeichnet, dass** die erste und zweite Transporttasche (15, 16) jeweils eine vordere und hintere Taschenwand (21, 24; 22, 23) ausbilden und die beiden Transporttaschen (15, 16) mit ihren hinteren Taschenwänden (22, 23) einander zugewandt sind und insbesondere einander anliegen.

15. Fördereinheit (1) nach einem der Ansprüche 1 bis 14, **dadurch gekennzeichnet, dass** mindestens einer, insbesondere beide der nachfolgenden Sachverhalte zutrifft:
- die erste Transporttasche (15), wie «Soft Pouch», ist nach unten entleerbar ausgebildet;
- die zweite Transporttasche (16, wie «Hard Pouch», ist nach unten entleerbar ausgebildet.

16. **Förderanlage** (100) zum hängenden Transport von Fördergüter (10), entlang von Förderschienen, insbesondere eine schienengeführte Förderanlage (100) oder ein Förderkettenanlage, mit mindestens einer Fördereinheit (1) nach einem der Ansprüche 1 bis 15.
